# EUROPEAN PATENT SPECIFICATION

(11) **EP 4 243 113 B1**
(45) Date of publication and mention of the grant of the patent: **25.11.2026**
(21) Application number: 22849779.8
(22) Date of filing: 18.07.2022
(51) Int. Cl.: H01M 4/13, H01M 4/139, H01M 4/04, H01M 4/62, H01M 10/052

(54) **ELECTRODE FOR SECONDARY BATTERY, METHOD FOR MANUFACTURING SAME, AND SECONDARY BATTERY COMPRISING ELECTRODE**
ELEKTRODE FÜR SEKUNDÄRBATTERIE, VERFAHREN ZUR HERSTELLUNG DAVON UND SEKUNDÄRBATTERIE MIT DER ELEKTRODE
ÉLECTRODE POUR BATTERIE SECONDAIRE, SON PROCÉDÉ DE FABRICATION ET BATTERIE SECONDAIRE COMPRENANT CETTE ÉLECTRODE

(30) Priority: 30.07.2021 KR 20210100746
(43) Date of publication of application: 13.09.2023
(73) Proprietor: LG Energy Solution, Ltd., Seoul 07335 (KR)
(72) Inventor: KIM, Myeongsoo, Daejeon 34122 (KR); KIM, Ki Tae, Daejeon 34122 (KR); KIM, Jeonggil, Daejeon 34122 (KR); KIM, Taegon, Daejeon 34122 (KR)
(74) Representative: Goddar, Heinz J.
(86) International application number: PCT/KR2022/010468
(87) International publication number: WO 2023/008803

(56) References cited:
- JP-B2- 5 888 228
- JP-B2- 6 145 638
- KR-A- 20120 114 117
- KR-A- 20140 136 952
- KR-A- 20180 121 411
- KR-A- 20200 090 744
- US-A1- 2015 061 176
- LI JIANLIN ET AL: "Optimization of multicomponent aqueous suspensions of lithium iron phosphate (LiFePO4) nanoparticles and carbon black for lithium-ion battery cathodes", JOURNAL OF COLLOID AND INTERFACE SCIENCE, ACADEMIC PRESS,INC, US, vol. 405, 25 May 2013 (2013-05-25), pages 118 - 124, XP028574100, ISSN: 0021-9797, DOI: 10.1016/J.JCIS.2013.05.030

## Description

### [Technical Field]

This application claims the benefit of priority based on Korean Patent Application No. 10-2021-0100746 filed on July 30, 2021.

The present invention relates to an electrode for a secondary battery, its manufacturing method, and a secondary battery comprising the electrode.

### [Background Art]

Recently, there is increasing interest in energy storage technology. As the application area thereof extends to the energy for mobile phones, camcorders, notebook PCs, and even electric vehicles, the effort of research and development of electrochemical devices is being carried out more and more concretely.

Electrochemical devices are the most noteworthy area in this respect, and among them, the development of a secondary battery capable of charging/discharging is the focus of attention. Recently, in developing these batteries, research and development on the design of new electrodes and batteries are being actively carried out in order to improve capacity density and specific energy.

Among secondary batteries that are currently put to practical use, lithium secondary batteries are in the spotlight because of their high operating voltage and significantly higher energy density compared to conventional batteries.

Meanwhile, along with the expansion or development of usage of secondary batteries, there is a continuous need for improvement in the electrode in terms of low resistance, high capacity, and improvement of mechanical properties and productivity.

The electrode for the secondary battery is generally manufactured by stacking an electrode active material layer, which is formed by binding an active material and an electrically conductive material used as necessary with a binder, on a current collector. Specifically, a method of applying a slurry containing an electrode active material, a binder, an electrically conductive material, etc. on a current collector and removing the solvent by heat or the like is generally used. However, the method described above has a disadvantage that the solvent must be removed from the slurry for the electrode, and thus economic feasibility and productivity are lowered.

Therefore, in order to improve this disadvantage, a method for manufacturing an electrode without using the slurry for the electrode has been proposed. That is, a technique for manufacturing an electrode film by mixing an active material, a binder, and an electrically conductive material without a liquid medium such as a solvent or a dispersion medium, and then passing the powder mixture through a rolling roll is being actively developed. Generally, binders called "fibrillizable binders" or fibril-forming binders are used in these methods. The binder makes it possible to produce a free-standing electrode film by binding the active material and the electrically conductive material while being fibrillated. The electrode film prepared in this way is used for manufacturing the electrode in a manner of stacking it on the current collector.

The conventional method as described above provides various advantages compared to the method of applying the slurry for the electrode. However, the method has a disadvantage that when the particle size of the active material is small, since the dough becomes very hard, it is difficult to subsequent processing, and it is well broken due to lack of flexibility.

Therefore, a solution to this problem is required.

### [Prior Art Document]

Korean Laid-open Patent Publication No. 10-2006-0025230
US 2015/0061176 A1 discloses a process for producing a cathode foil of a lithium-containing battery, comprising: (i) provision of a dry, solvent-free composition which comprises polytetrafluoroethylene, an electrically conductive, electrochemically inactive carbon material and an electrochemically active cathode material, (ii) formation of at least partially fibrillated polytetrafluoroethylene by action of shear forces on the dry, solvent-free composition to give a fibrillated composition, (iii) forming of the fibrillated composition to give a cathode foil.

### [Disclosure]

### [Technical Problem]

It is an object of the present invention to provide an electrode for a secondary battery comprising a dry electrode film having excellent flexibility and minimizing breakage while comprising an active material having a small particle size, which has been devised to solve the above problems of the prior art.

It is another object of the present invention is to provide a method for manufacturing an electrode for a secondary battery capable of efficiently manufacturing the electrode.

It is still another object of the present invention is to provide a secondary battery having excellent operating characteristics and lifetime characteristics by comprising the electrode described above.

### [Technical Solution]

The above problems are solved in accordance with the subject-matter of the independent claims. Further embodiments result from the subclaims and the following description.

In order to achieve the above objects,
the present invention provides an electrode for a secondary battery comprising a dry electrode film comprising an active material having an average particle diameter of 0.05 *µ*m to 3 *µ*m, an electrically conductive material, and a fibrillated binder; and a current collector on which the electrode film is stacked wherein the dry electrode film is a free-standing film the fibrillated binder comprises polytetrafluoroethylene; and the fibrillated binder further comprises acrylic-modified polytetrafluoroethylene.

In addition, the present invention provides a method for manufacturing an electrode for a secondary battery comprising the steps of,
(a) mixing an active material having an average particle diameter of 0.05 *µ*m to 3 *µ*m, an electrically conductive material, and a fibrillable binder;
(b) performing shear mixing on the mixture to fiberize the fibrillable binder and thus to prepare a dry dough for the electrode;
(c) pulverizing the dry dough for the electrode to prepare a powder state;
(d) molding the powder in the form of a free-standing film by pressing the powder; and
(e) stacking the free-standing film on a current collector; wherein the fibrillable binder comprises polytetrafluoroethylene; and the fibrillable binder further comprises acrylic-modified polytetrafluoroethylene.

In addition, the present invention provides a secondary battery comprising the electrode.

### [Advantageous Effects]

The electrode for the secondary battery of the present invention provides excellent quality by comprising a dry electrode film that has excellent flexibility and minimizes the occurrence of breakage while comprising an active material with a small particle size,

In addition, the method for manufacturing the electrode for the secondary battery of the present invention provides an effect of greatly improving the manufacturing efficiency of the electrode.

In addition, the secondary battery of the present invention provides very excellent operating characteristics and lifetime characteristics by comprising the electrode.

### [Description of Drawings]

FIG. 1 is an image obtained by photographing the shape of the fibrillated binder comprised in the electrode as an embodiment of the present invention.
FIG. 2 is a diagram schematically showing the structure of a free-standing film manufactured depending on the particle size of the active material.
FIG. 3 is a diagram schematically showing the manufacturing form of a free-standing film when one type of fibrillable binder is used as an embodiment of the present invention.
FIG. 4 is a diagram schematically illustrating a manufacturing form of a free-standing film when two or more types of fibrillable binders having different glass transition temperatures are used as an embodiment of the present invention.
FIG. 5 is a photograph obtained by taking the form of the free-standing film manufactured in Example 1 as an embodiment of the present invention.

### [Best Mode]

Hereinafter, embodiments of the present invention will be described in detail with reference to the accompanying drawings so that those of ordinary skill in the art to which the present invention pertains can easily carry out the present invention. However, the present invention may be embodied in various different forms and is not limited to the embodiments described herein.

When the expression "stacked or disposed on the upper part or the lower part of a component" is mentioned to describe the relationship between components, it should be understood that although it may be directly stacked or disposed on the other components, other components may exist in therebetween.

The electrode for the secondary battery of the present invention comprises a dry electrode film comprising an active material having an average particle diameter of 0.05 *µ*m to 3 *µ*m, an electrically conductive material, and a fibrillated binder; and a current collector on which the electrode film is stacked.

As the particle size of the active material comprised in the electrode is smaller, since the degree of integration of the active material in the electrode is increased and thus the load amount of the active material per unit volume is increased, the energy density is increased and thus it is advantageous in terms of the capacity of the battery. Therefore, there is a need to use an active material having a small particle size in the manufacture of the electrode.

However, if the active material having an average particle diameter of 3 *µ*m or less is used for the production of a dry electrode film, dough for manufacturing the electrode becomes too hard, and thus it is very difficult to process it in the form of a film, and even if it is possible to manufacture by applying high pressure, there is a problem that the prepared electrode film lacks flexibility and thus is easily broken. Therefore, according to the prior art, it is almost impossible to manufacture the dry electrode film, which is manufactured using active materials with a diameter of less than 3 *µ*m. In addition, in the case of the active material having an average particle diameter of less than 0.05 *µ*m, it is difficult to handle and expensive, and thus it is difficult to apply to the present invention.

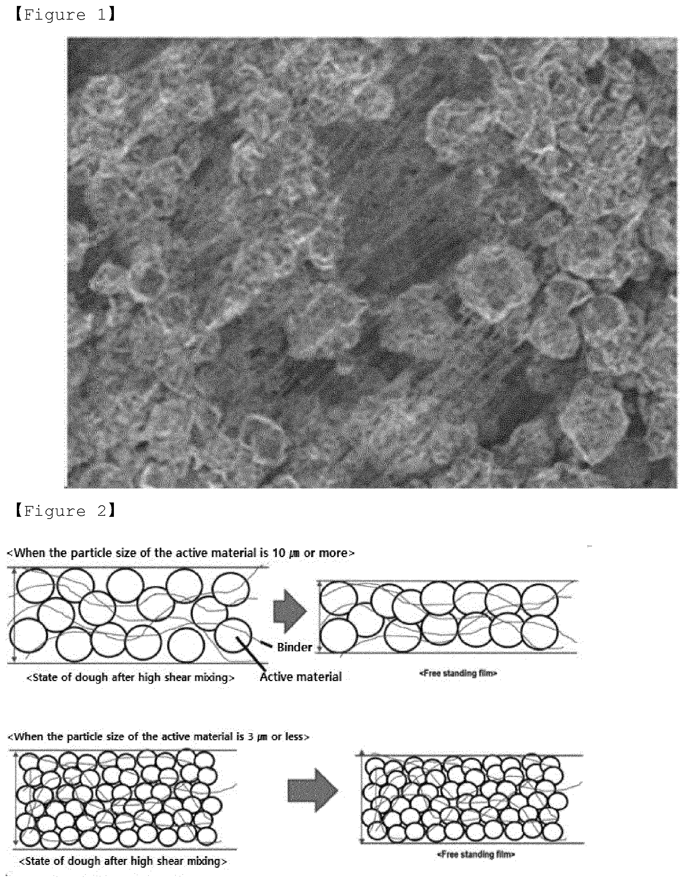

The fundamental reason why it is difficult to use the active material with a small size as described above seems to be that when performing high-shear mixing, the bonding properties between the particles are increased, and thus the dough is easily hardened, and the free space that can deform the shape is reduced as the internal pores are reduced, as shown in FIG. 2. In addition, the reason seems to be that as the size of the active material is decreased, the contact area between the active materials is increased, and accordingly, the dough hardens easily, and the pressure for forming into a film is increased beyond the limit of the equipment.

In the present invention, the electrode as described above was prepared for the first time by solving the manufacturing difficulties as described above. The electrode prepared in the present invention provides the effect of improving the operating characteristics and lifetime characteristics of the battery.

In the present invention, the average particle diameter of the active material may be set based on D50.

The electrode for the secondary battery of the present invention may be a positive electrode or a negative electrode comprising polytetrafluoroethylene.

According to the present invention, the fibrillated binder further comprises acrylic-modified polytetrafluoroethylene. The acrylic-modified polytetrafluoroethylene refers to a binder in which the properties of polytetrafluoroethylene are modified by mixing an acrylic polymer with polytetrafluoroethylene. The acrylic-modified polytetrafluoroethylene can perform a function of improving the strength and flexibility of the free-standing film because the acrylic binder provides excellent adhesive properties above the glass transition temperature. In the above, polytetrafluoroethylene and the acrylic polymer may be mixed in a weight ratio of 7:3 to 3:7, preferably 6:4 to 4:6.

The polytetrafluoroethylene contained in the acrylic-modified polytetrafluoroethylene is a polymer capable of fibrillation, and for example, may be polytetrafluoroethylene having a high molecular weight, which has a melt viscosity of 108 poises or more at 380°C. In addition, when expressed as a standard specific gravity (ASTM D-1457), it may have a standard specific gravity of 2.210 or less, preferably 2.200 to 2.130.

The acrylic polymer may be, for example, a hydrocarbon-based monomer that is liquid at room temperature, and may be α,β-ethylenically unsaturated carboxylic acid esters such as methyl acrylate, methyl methacrylate, ethyl acrylate, ethyl methacrylate, n-propyl acrylate, n-propyl methacrylate, isopropyl acrylate, isopropyl methacrylate, lauryl acrylate and stearyl acrylate; hydroxyalkyl esters of α,β-ethylenically unsaturated carboxylic acids such as 2-hydroxyethyl acrylate, 2-hydroxyethyl methacrylate and 3-hydroxypropyl methacrylate; alkoxyalkyl esters of α,β-ethylenically unsaturated carboxylic acids such as diethylene glycol methacrylate; α,β-ethylenically unsaturated carboxylic acid amides such as acrylamide and methylol methacrylamide; α,β-ethylenically unsaturated carboxylic acids such as acrylic acid, methacrylic acid, itaconic acid, maleic anhydride, maleic acid, fumaric acid, and crotonic acid; acrylonitrile, etc, and one or more selected from these may be used.

The acrylic modified polytetrafluoroethylene may be used, for example, in the form of a powder, and specifically, Metabrene A-3000 manufactured by Mitsubishi Rayon company may be used. The structure of the powder may exist, for example, in the form of a matrix formed by mixing polytetrafluoroethylene and an acrylic polymer, or may have a structure formed by coating an acrylic polymer on polyterafluoroethylene.

The acrylic-modified polytetrafluoroethylene having a glass transition temperature exceeding 60°C may be used.

In one embodiment of the present invention, the fibrillated binder may comprise polytetrafluoroethylene and the acrylic-modified polytetrafluoroethylene in a weight ratio of 1:9 to 9:1, preferably 3:7 to 7:3.

In one embodiment of the present invention, the average particle diameter of the active material may be 0.05 *µ*m to 2 *µ*m, or 0.05 *µ*m to 1.5 *µ*m.

In one embodiment of the present invention, the dry electrode film may comprise fibers fibrillated in multiple directions by the production of the dry dough for the electrode by the primary fibrillation of the fibrillable binder; pulverization by grinding of the dry dough for the electrode; and secondary fibrillation of the fibrillable binder during the forming of the dry electrode film by pressurizing the powder.

In addition, the method for manufacturing the electrode for the secondary battery of the present invention is characterized in that it comprises the following steps:
(a) mixing an active material having an average particle diameter of 0.05 *µ*m to 3 *µ*m, an electrically conductive material, and a fibrillable binder;
(b) performing shear mixing on the mixture to fiberize the fibrillable binder and thus to prepare a dry dough for the electrode;
(c) pulverizing the dry dough for the electrode to prepare a powder state;
(d) molding the powder in the form of a free-standing film by pressing the powder; and
(e) stacking the free-standing film on a current collector.

All of the above-described electrode-related contents may be applied to the manufacturing method. Therefore, descriptions of overlapping contents will be omitted.

The powder in the powder preparation step (c) may have a particle diameter of 100 *µ*m to 1000 *µ*m, more preferably 300 *µ*m to 1000 *µ*m. If the particle diameter of the powder is less than 100 *µ*m, it is not preferable because there are difficulties in the process and the effect thereof is also limited. If the particle diameter of the powder exceeds 1000 *µ*m, it is not preferable because it may cause difficulties in forming a uniform thickness and rolling density when manufacturing in the form of a film.

In the present invention, the fibrillable binder means a binder that can be made into fibers by the addition of shearing force.

According to the present invention, the fibrillable binder comprises polytetrafluoroethylene.

According to the present invention, the fibrillable binder further comprises acrylic-modified polytetrafluoroethylene.

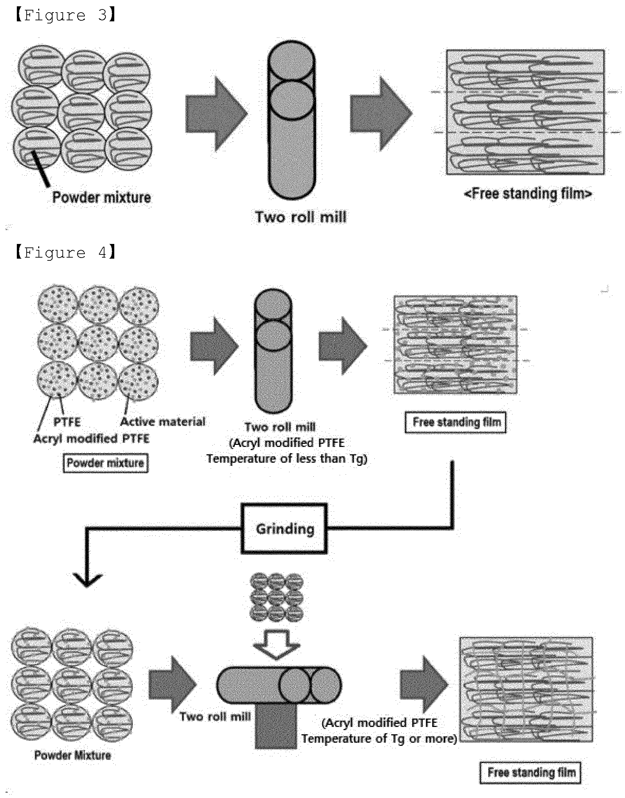

The acrylic modified polytetrafluoroethylene may have a glass transition temperature above 60°C. If the glass transition temperature is lower than the described temperature, the acrylic-modified polytetrafluoroethylene is fiberized in the dough preparation step (b), and subsequently, in the powder manufacturing step (c), the dry dough for the electrode is pulverized to a powder state, and thus the meaning of additionally adding acrylic-modified polytetrafluoroethylene is halved. That is, in one embodiment of the present invention, it is preferable that the acrylic-modified polytetrafluoroethylene is not fiberized in the dough preparation step (b) due to the glass transition temperature, but is fiberized in the film forming step (d), as shown in FIG. 4. According to this mechanism, the dry electrode film manufactured by the present invention can be manufactured to have high strength in both the MD (Machine Direction) direction and the TD (Transverse Direction) direction. Furthermore, the dry electrode film prepared by the present invention may have a form in which the fibrillable binder is fiberized in multiple directions.

In one embodiment of the present invention, the dough preparation step (b) may be performed at the glass transition temperature or at a temperature higher than the glass transition temperature of polytetrafluoroethylene, and specifically may be carried out in the range of 30 to 60 °C. In this case, the upper limit of the temperature is preferably lower than the glass transition temperature of the acrylic-modified polytetrafluoroethylene.

In addition, the film forming step (d) may be performed at the glass transition temperature or at a temperature higher than the glass transition temperature of the acrylic-modified polytetrafluoroethylene, and specifically may be carried out in the range of exceeding 60 °C to 120 °C.

In one embodiment of the present invention, the fibrillable binder may comprise polytetrafluoroethylene and the acrylic-modified polytetrafluoroethylene in a weight ratio of 1:9 to 9:1, preferably 3:7 to 7:3. When comprised in the above-mentioned range, the dry electrode film to be manufactured may have high strength in both the MD (Machine Direction) direction and the TD (Transverse Direction) direction, and furthermore, it is preferable because it can be fiberized in multiple directions and thus can have high strength in all directions.

In addition, the present invention provides
a secondary battery comprising the electrode of the present invention.
The secondary battery may be a lithium secondary battery.

Hereinafter, the content of the present invention described above will be described in more detail.

### <Active material>

As the active material, all of the components commonly used for the positive electrode and the negative electrode may be used. Specifically, for example, if the active material is a positive electrode active material, it may be particles of any one active material selected from the group consisting of LiCoO₂, LiNiO₂, LiMn₂O₄, LiCoPO₄, LiFePO₄ and LiNi1-x-y-zCoxMlyM2zO₂(wherein M1 and M2 are each independently any one selected from the group consisting of Al, Ni, Co, Fe, Mn, V, Cr, Ti, W, Ta, Mg and Mo, and x, y and z are, independently of each other, the atomic fractions of the elements of the oxide composition and 0≤x<0.5, 0≤y<0.5, 0≤z<0.5, 0<x+y+z≤1), or a mixture of two or more thereof.

In addition, if the electrode active material is a negative electrode active material, it may be any one active material selected from the group consisting of carbonaceous material such as natural graphite or artificial graphite (mesophase carbon microbeads(MCMB, pyrolytic carbon, liquid crystal pitch-based carbon fiber (mesophase pitch-based carbon fiber), liquid crystal pitches (mesophase pitches), petroleum or coal tar pitch derived cokes, etc.); lithium-containing titanium composite oxide (LTO), metals(Me) which are Si, Sn, Li, Zn, Mg, Cd, Ce, Ni or Fe; alloys composed of the above-described metals (Me); oxides of the above-described metals (Me) (MeOx, for example: SIO); and a composite of the above-described metals (Me) and carbon, or a mixture of two or more thereof.

The active material may be contained, for example, in an amount of 85 to 98% by weight based on the total weight of the electrode film.

### <Electrically conductive material>

In one embodiment of the present invention, the electrically conductive material is not particularly limited as long as it has conductivity without causing chemical change in the secondary battery. For example, it may be at least one selected from the group consisting of carbon black such as carbon black, acetylene black, Ketjen black, channel black, furnace black, lamp black, thermal black, etc.; metal powders such as aluminum and nickel powder; electrically conductive whiskers such as zinc oxide and potassium titanate; electrically conductive oxides such as titanium oxide; polyphenylene derivatives.

The electrically conductive material may be contained, for example, in an amount of 1 to 10% by weight, specifically 2 to 4% by weight, based on the total weight of the electrode film.

### <Binder>

The present invention may further comprise other binders in addition to the fibrillated binder or fibrillable binder. The other binder is a component that assists bonding between the active material and the electrically conductive materials or adhesion to the current collector, and may be used without limitation as long as it is a material that can be used for the electrode. Specifically, the binder may be a non-acrylic polymer or an acrylic polymer.

The acrylic polymer is not limited as long as it is a polymer in which at least one repeating unit of the binder polymer is derived from an acrylic monomer. The acrylic monomer may be an alkyl acrylate, an alkyl methacrylate, an isoalkyl (meth) acrylate, and in this case, "alkyl" may be an alkyl group having 1 to 10 carbon atoms, and more specifically, an alkyl group having 1 to 5 carbon atoms.

Specific examples of the acrylic monomer may comprise methyl (meth)acrylate, ethyl (meth)acrylate, propyl (meth)acrylate, butyl (meth) acrylate, and pentyl (meth)acrylate.

The acrylic polymer may be a homopolymer composed of one repeating unit derived from an acrylic monomer, a copolymer including repeating units derived from two or more acrylic monomers, or a mixture of two or more thereof.

In addition, the acrylic polymer may be a copolymer of at least one non-acrylic monomer and an acrylate monomer, such as at least one selected from the group consisting of acrylate-styrene-butadiene rubber, acrylate-acrylonitrile-styrene-butadiene rubber, methyl acrylate-styrene-butadiene rubber, methyl acrylate-acrylonitrile-styrene-butadiene rubber, ethyl acrylate-styrene-butadiene rubber, ethyl acrylate-acrylonitrile-styrene-butadiene rubber, propyl acrylate-styrene-butadiene rubber, propyl acrylate-acrylonitrile-styrene-butadiene rubber, butyl acrylate-styrene-butadiene rubber, and butyl acrylate-acrylonitrile-styrene-butadiene rubber. In the case of a copolymer of a non-acrylic monomer and an acrylate monomer, the weight% of the repeating unit derived from the acrylate monomer may be 5 to 45% by weight, specifically 5 to 35% by weight.

In addition, the acrylic polymer may be a mixture of two or more types of homoacrylic polymers, a mixture of two or more types of acrylic copolymers, or a mixture of two or more types of copolymers of non-acrylic monomers and acrylate monomers, and also, may be a mixture of two or more of a homoacrylic polymer, an acrylic copolymer, and a copolymer of a non-acrylic monomer and an acrylate monomer.

The non-acrylic polymer means a polymer comprising at least one repeating unit derived from a non-acrylic monomer, and specifically, may be a homopolymer composed of one type of repeating unit, a copolymer including two or more different types of repeating units, a mixture of two or more different types of homopolymers, or a mixture of two or more thereof.

Specific examples of the non-acrylic polymer may be one from the group consisting of styrene-butadiene rubber (SBR), a mixture of polystyrene and polybutadiene, polyvinylidene fluoride (PVDF), polyvinylidene fluoride-cohexafluoropropylene, polyvinylidene fluoride-cotrichloroethylene, polytetrafluoroethylene (PTFE), polyvinylpyrrolidone, polyethylene oxide, polyarylate, cellulose acetate, cellulose acetate butyrate, cellulose acetate propionate, cyanoethylpullulan, cyanoethyl polyvinyl alcohol, cyanoethyl cellulose), cyanoethyl sucrose, pullulan, and carboxyl methyl cellulose (CMC) or a mixture of two or more thereof. Among them, polyvinylidene fluoride (PVDF), polyethylene oxide (PEO), etc. may be preferably used.

In one embodiment of the present invention, the total binder content including the fibrillated binder may be 0.1 to 10% by weight, specifically, 1 to 4% by weight based on the total weight of the electrode film. When the content of the binder satisfies this range, the adhesive strength between the electrode active material layer and the current collector can be improved, the resistance of the electrode can be reduced or the detachment of the electrode can be prevented even after the degradation of the cell by improving adhesive strength, and the migration of the binder to the surface of the electrode can be suppressed, and thus the ionic conductivity or electrical conductivity in the electrode can be improved.

### <Current collector>

As the current collector, a known current collector used in secondary batteries may be used without limitation. For example, stainless steel, aluminum, nickel, titanium, carbon, copper; stainless steel surface-treated with carbon, nickel, titanium or silver; aluminum-cadmium alloy; a non-conductive polymer surface-treated with an electrically conductive material; a non-conductive polymer surface-treated with metal; a conductive polymer and the like may be used.

### <Manufacture of electrode>

Hereinafter, a method of manufacturing the electrode for the secondary battery of the present invention will be described by way of example.

The method for manufacturing the electrode for the secondary battery according to an embodiment of the present invention may comprise the following steps:
(a) mixing an active material having an average particle diameter of 0.05 *µ*m to 3 *µ*m, an electrically conductive material, and a fibrillable binder;
(b) performing shear mixing on the mixture to fiberize the fibrillable binder and thus to prepare a dry dough for the electrode;
(c) pulverizing the dry dough for the electrode to prepare a powder state;
(d) molding the powder in the form of a free-standing film by pressing the powder; and
(e) stacking the free-standing film on a current collector.

The mixing of step (a) means mixing in the absence of a solvent. The dry mixing may be performed by mixing at 600 rpm to 20000 rpm, more specifically, 1000 rpm to 12000 rpm, for 0.5 to 10 minutes at room temperature or lower using a stirring device.

The shear mixing of step (b) may comprise applying a high shearing force by shear compressing the mixture. Specifically, when using a device for applying a shearing force, for example, PBV-0.1L (Irie Shokai company), the high shearing force may be applied by shearing and compressing the mixture at 10 rpm to 100 rpm for 1 minute to 10 minutes. However, it is not necessarily limited to such a method.

The high shearing force may be 50N to 1000N, specifically 100N to 500N, and more specifically 100N to 300N.

In step (c), the powder may have a particle diameter of 100 *µ*m to 1000 *µ*m.

In the step of forming the free-standing film of step (d), the pressurization may be performed using a Two roll mill MR-3 (Inoue company).

Step (e) of stacking the free-standing film on the current collector may comprise a step of placing the free-standing film on a current collector and rolling them, and the rolling may be performed through a roll press method.

### <Manufacture of secondary battery>

In addition, the present invention relates to a secondary battery comprising a positive electrode, a negative electrode, and a separator interposed between the positive electrode and the negative electrode, wherein at least one of the positive electrode and negative electrode is the aforementioned electrode. When the electrode according to the present invention is used only as any one of the positive electrode and negative electrode, the other electrode may be any one of electrodes known in the art without limitation.

Hereinafter, the secondary battery will be described as an example. Specifically, a lithium secondary battery will be described as an example.

As the separator, a porous polymer film commonly used as a separator in a lithium secondary battery, for example, a porous polymer film made of a polyolefin-based polymer such as ethylene homopolymer, propylene homopolymer, ethylene/butene copolymer, ethylene/hexene copolymer, and ethylene/methacrylate copolymer may be used alone or may be laminated and used. In addition, an insulating thin film having high ion permeability and mechanical strength may be used. The separator may comprise a safety reinforced separator (SRS) having an organic/inorganic composite porous coating layer coated thinly by connecting and fixing inorganic particles to the surface of a separator substrate such as a porous polymer film through a binder polymer. In addition, a conventional porous nonwoven fabric, for example, a nonwoven fabric made of glass fiber having a high melting point, polyethylene terephthalate fiber, etc. may be used, and a form in which the porous coating layer of the above-described organic/inorganic composite is applied even on the porous nonwoven fabric is also possible, but is not limited thereto.

The lithium secondary battery of the present invention can be manufactured by accommodating the assembly of the positive electrode and the negative electrode in a battery case and injecting electrolyte.

The electrolyte may comprise a lithium salt and an organic solvent for dissolving it. The lithium salt may be used without limitation as long as it is commonly used in electrolytes for secondary batteries, and for example, the anion of the lithium salt may be at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The organic solvent comprised in the electrolyte may be used without limitation as long as it is used in this field, and representatively, may be at least one selected from the group consisting of propylene carbonate, ethylene carbonate, diethyl carbonate, dimethyl carbonate, ethylmethyl carbonate, methylpropyl carbonate, dipropyl carbonate, dimethyl sulfoxide, acetonitrile, dimethoxyethane, diethoxyethane, vinylene carbonate, sulfolane, gamma-butyrolactone, propylenesulfite and tetrahydrofuran.

In particular, among the carbonate-based organic solvents, ethylene carbonate and propylene carbonate, which are cyclic carbonates, are highly viscous organic solvents and have a high dielectric constant, so they can well dissociate lithium salts in the electrolyte, and thus can be used preferably. If a linear carbonate having a low viscosity and a low dielectric constant, such as dimethyl carbonate and diethyl carbonate, is mixed in an appropriate ratio with the cyclic carbonate, an electrolyte having a high electrical conductivity can be prepared, and thus can be used more preferably.

Optionally, the electrolyte stored according to the present invention may further comprise an additive such as an overcharging inhibitor comprised in a conventional electrolyte solution.

A known solid electrolyte may be used as the electrolyte.

The secondary battery according to an embodiment of the present invention may be a stack type, a wound type, a stack and fold type, or a cable type. In addition, the secondary battery may be used not only in a battery cell used as a power source for a small device, but also as a unit cell in a medium or large-sized battery module comprising a plurality of battery cells. Preferred examples of the medium or large-sized device may comprise electric vehicles, hybrid electric vehicles, plug-in hybrid electric vehicles, and power storage systems, and in particular, the secondary battery can be usefully used in hybrid electric vehicles and batteries for storing new and renewable energy, which are areas requiring high output.

With respect to the construction and manufacturing method of the secondary battery of the present invention, for parts not described above, the construction and manufacturing method known in the art may be applied without limitation.

Hereinafter, the present invention will be described in detail with reference to examples in order to specifically describe the present invention. However, the embodiments according to the present invention may be modified in various other forms, and the scope of the present invention should not be construed as being limited to the embodiments described below. Examples of the present invention are provided in order to more completely explain the present invention to those of ordinary skill in the art.

### Example 1: Manufacture of positive electrode

96g of LFP powder (product name: DY-3, Dynanonic company), which is a particle of positive electrode active material with an average particle diameter of 1.08*µ*m, 2g of Li250 (Denka company) as an electrically conductive material and 1 g of PTFE and 1g of acryl modified PTFE(product name: A3800, Mitsubishi company) as a binder were mixed at 5000 rpm for 1 minute without solvent using Lab Blender (Waring company) as a blender(first mixing). Next, high shear mixing was performed by applying a shearing force of 250N to the mixture (PBV-0.1L, Irie Shokai company) at the temperature of 50 °C(second mixing). Next, the secondary mixture in the form of a dough was pulverized using a grinder (trade name: ZM200, Retsch company) and sieved to prepare a powder mixture having a particle size of 300 *µ*m to 1000 *µ*m. The mixture in the powder state was pressurized (Two roll mill MR-3, Inoue company) to prepare a free-standing film. At this time, the temperature of the roll of the Two roll mill MR-3 was set to 70°C and sheeting was performed. Thereafter, the free-standing film was placed on one side of an aluminum current collector having a thickness of 15 *µ*m, and pressurized to prepare a positive electrode.

### Comparative Example 1: Manufacture of positive electrode

The manufacturing process into a free-standing film was carried out by pressing (Two roll mill MR-3, Inoue company) the secondary mixture in the form of dough in Example 1, without the process of grinding and sieving to prepare the mixture in a powder state.

However, the secondary mixture was too hard to obtain a free-standing film, and thus it was also impossible to perform the electrode manufacturing process thereafter.

### Comparative Example 2: Manufacture of positive electrode

A positive electrode was manufactured in the same way as in Example 1, except that in Example 1, only "2 g of PTFE" is used as a binder instead of "1 g of PTFE and 1 g of acrylic modified PTFE."

### Example 2: Manufacture of positive electrode

A positive electrode was manufactured in the same way as in Example 1, except that in Example 1, the secondary mixing is carried out at 100 °C.

### Experimental Example 1: Observation of the shape of free-standing film (dry electrode film)

### (1) Evaluation of appearance of free-standing film

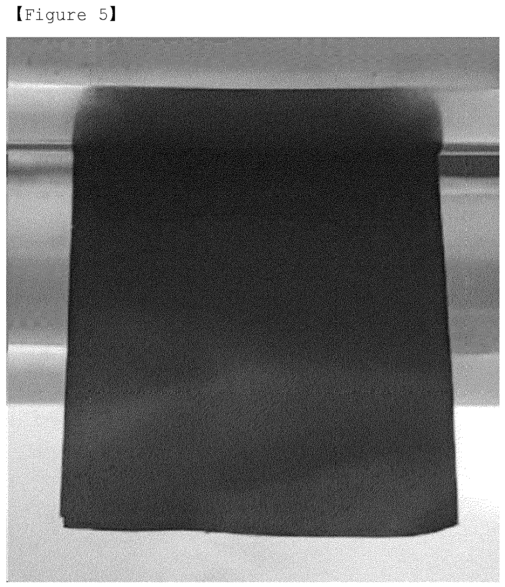

The shapes of the free-standing films prepared in Example 1, Comparative Example 2, and Example 2 were visually checked and photographed, and the results are shown in FIG. 5.

As can be seen in FIG. 5, in the case of the free-standing film of Example 1 of the present invention, breakage of the edge was not observed, but in the case of the free-standing films of Comparative Example 2 and Example 2, cracked edges were observed in some areas.

### (2) Evaluation of flexibility of free-standing film

The flexibility of the free-standing films prepared in Example 1, Comparative Example 2, and Example 2 above was measured in the longitudinal and transverse directions respectively using a mandrel flexural evaluation tester apparatus (standard test specification: ISO 1519: 2011, ASTM D522, DIN 53152) by measuring the flexibility while gradually decreasing the diameter of the cylindrical device, and measuring the diameter at which cracking begins. The measurement results are shown in Table 1 below.

### (3) Evaluation of tensile strength of free-standing film

In order to measure the longitudinal and transverse tensile strength of the free-standing films prepared in Example 1, Comparative Example 2, and Example 2, electrodes having a width of 20 mm, a length of 200 mm, and a thickness of 200 *µ*m were sampled. For the samples, tensile strength was measured at a condition of 50 mm/min by a 180 degree peel measurement method using Instron's UTM equipment. During the measurement, the maximum value of the force applied up to the point in time at which cracks did not occur on the film was evaluated as the strength of the free-standing film, and the measurement results are shown in Table 1 below.

**Table 1:**

| | **Flexibility (diameter at which cracking occurs, mm)** | | **Tensile strength** | |
|---|---|---|---|---|
| | **Longitudinal direction** | **Transverse direction** | **Longitudinal direction** | **Transverse direction** |
| Example 1 free-standing film | 3 | 5 | 6.5 | 3.1 |
| Comparative Example 2 free-standing film | 3 | 25 | 6.2 | 0.7 |
| Example 2 free-standing film | 3 | 30 | 5.9 | 0.4 |

### Example 3 and Example 4: Manufacture of lithium secondary battery

Batteries of Example 2 and Example 4 were prepared using the positive electrodes prepared in Example 1 and Example 2, respectively. A specific manufacturing method is as follows.

### (1) Manufacture of negative electrode

Natural graphite as a negative electrode active material, carbon black which is an electrically conductive material, and a PVdF binder as a negative electrode active material were mixed in an N-methylpyrrolidone solvent in a weight ratio of 85:10:5 to prepare a composition for forming a negative electrode, and the composition was applied to a copper current collector to prepare a negative electrode.

### (2) Manufacture of lithium secondary battery

A separator of porous polyethylene was interposed between the positive electrode prepared in Example 1 or Example 2, and the negative electrode prepared in (1) above to manufacture an electrode assembly, and the electrode assembly was placed inside the case, and then, the electrolyte was injected into the case to manufacture a lithium secondary battery. At this time, the electrolyte solution was prepared by dissolving lithium hexafluorophosphate (LiPF₆) at a concentration of 1.0M in an organic solvent consisting of ethylene carbonate/dimethyl carbonate/ethylmethyl carbonate (mixed volume ratio of EC/DMC/EMC = 3/4/3). Through this, lithium secondary batteries of Example 2 and Example 4 were manufactured.

### Experimental Example 3: Evaluation of capacity retention rate of lithium secondary battery

The secondary batteries of Example 3 and Example 4 manufactured above were charged and discharged to evaluate the capacity retention rate, and the results are shown in Table 2 below. Cycles 1 and 2 were charged and discharged at 0.1C, and from cycle 3 to cycle 49, charging and discharging were performed at 0.5C. Cycle 50 ended in the charged state (lithium is in the negative electrode).
Charging conditions: CC (constant current)/CV (constant voltage) (4.25mV/0.05C current cut-off)
Discharging condition: CC (constant current) condition 3.0V

The capacity retention rate was derived by the following calculations. 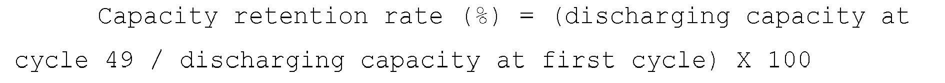 Capacity retention rate (%) = (discharging capacity t cycle 49/discharging capacity at first cycle) x 100

**Table 2:**

| | Capacity retention rate (%) |
|---|---|
| Example 3 lithium secondary battery | 97.4 |
| Example 4 lithium secondary battery | 97.0 |

## Claims

1. An electrode for a secondary battery comprising a dry electrode film comprising an active material having an average particle diameter of 0.05 *µ*m to 3 *µ*m, an electrically conductive material, and a fibrillated binder; and a current collector on which the dry electrode film is stacked;
wherein the dry electrode film is a free-standing film
the fibrillated binder comprises polytetrafluoroethylene; and
the fibrillated binder further comprises acrylic-modified polytetrafluoroethylene.

2. The electrode for the secondary battery according to claim 1, wherein the fibrillated binder comprises polytetrafluoroethylene and the acrylic-modified polytetrafluoroethylene in a weight ratio of 1:9 to 9:1.

3. The electrode for the secondary battery according to claim 1, wherein the acrylic-modified polytetrafluoroethylene is formed by mixing polytetrafluoroethylene and an acrylic polymer in a weight ratio of 7:3 to 3:7.

4. The electrode for the secondary battery according to claim 1, wherein the average particle diameter of the active material is 0.05*µ*m to 2*µ*m.

5. The electrode for the secondary battery according to claim 1, wherein the dry electrode film comprises fibers fibrillated in multiple directions by the production of the dry dough for the electrode by the primary fibrillation of the fibrillable binder, pulverization by grinding of the dry dough for the electrode, and secondary fibrillation of the fibrillable binder during the forming of the dry electrode film by pressurizing the powder.

6. A method for manufacturing an electrode for a secondary battery comprising the steps of,
(a) mixing an active material having an average particle diameter of 0.05 *µ*m to 3 *µ*m, an electrically conductive material, and a fibrillable binder;
(b) performing shear mixing on the mixture to fiberize the fibrillable binder and thus to prepare a dry dough for the electrode;
(c) pulverizing the dry dough for the electrode to prepare a powder state;
(d) molding the powder in the form of a free-standing film by pressing the powder; and
(e) stacking the free-standing film on a current collector;
wherein the fibrillable binder comprises polytetrafluoroethylene; and
the fibrillable binder further comprises acrylic-modified polytetrafluoroethylene.

7. The method for manufacturing the electrode for the secondary battery according to claim 6, wherein the powder in step (c) has a particle diameter of 100 *µ*m to 1000 *µ*m.

8. The method for manufacturing the electrode for the secondary battery according to claim 6, wherein the fibrillable binder comprises polytetrafluoroethylene and the acrylic-modified polytetrafluoroethylene in a weight ratio of 1:9 to 9:1.

9. The method for manufacturing the electrode for the secondary battery according to claim 6, wherein the acrylic-modified polytetrafluoroethylene is formed by mixing polytetrafluoroethylene and an acrylic polymer in a weight ratio of 7:3 to 3:7.

10. The method according to claim 6, wherein step (b) is performed at the glass transition temperature of polytetrafluoroethylene or at a temperature higher than the glass transition temperature of polytetrafluoroethylene and lower than the glass transition temperature of acrylic-modified polytetrafluoroethylene, and step (d) is performed at the glass transition temperature of acrylic-modified polytetrafluoroethylene or at a temperature higher than the glass transition temperature of acrylic-modified polytetrafluoroethylene.

11. A secondary battery comprising the electrode of claim 1.

## Patentansprüche

1. Elektrode für eine Sekundärbatterie, umfassend einen Trockenelektrodenfilm, umfassend ein aktives Material mit einem durchschnittlichen Teilchendurchmesser von 0,05 µm bis 3 µm, ein elektrisch leitfähiges Material und ein fibrilliertes Bindemittel; und einen Stromabnehmer, auf dem der Trockenelektrodenfilm gestapelt ist;
wobei der Trockenelektrodenfilm ein freistehender Film ist,
das fibrillierte Bindemittel Polytetrafluorethylen umfasst; und
das fibrillierte Bindemittel ferner acrylmodifiziertes Polytetrafluorethylen umfasst.

2. Elektrode für die Sekundärbatterie nach Anspruch 1, wobei das fibrillierte Bindemittel Polytetrafluorethylen und das acrylmodifizierte Polytetrafluorethylen in einem Gewichtsverhältnis von 1:9 bis 9:1 umfasst.

3. Elektrode für die Sekundärbatterie nach Anspruch 1, wobei das acrylmodifizierte Polytetrafluorethylen durch Mischen von Polytetrafluorethylen und einem Acrylpolymer in einem Gewichtsverhältnis von 7:3 bis 3:7 gebildet wird.

4. Elektrode für die Sekundärbatterie nach Anspruch 1, wobei der durchschnittliche Teilchendurchmesser des aktiven Materials 0,05 µm bis 2 µm beträgt.

5. Elektrode für die Sekundärbatterie nach Anspruch 1, wobei der Trockenelektrodenfilm Fasern umfasst, die in mehreren Richtungen durch die Herstellung des Trockenteigs für die Elektrode durch die primäre Fibrillierung des fibrillierbaren Bindemittels, Pulverisierung durch Mahlen des Trockenteigs für die Elektrode und sekundäre Fibrillierung des fibrillierbaren Bindemittels während der Bildung des Trockenelektrodenfilms durch Druckbeaufschlagung des Pulvers fibrilliert werden.

6. Verfahren zur Herstellung einer Elektrode für eine Sekundärbatterie, umfassend die folgenden Schritte:
(a) Mischen eines aktiven Materials mit einem durchschnittlichen Teilchendurchmesser von 0,05 µm bis 3 µm, eines elektrisch leitfähigen Materials und eines fibrillierbaren Bindemittels;
(b) Durchführen von Schermischen an der Mischung, um das fibrillierbare Bindemittel zu zerfasern und somit einen Trockenteig für die Elektrode herzustellen;
(c) Pulverisieren des Trockenteigs für die Elektrode, um einen Pulverzustand herzustellen;
(d) Formen des Pulvers in Form eines freistehenden Films durch Pressen des Pulvers; und
(e) Stapeln des freistehenden Films auf einem Stromabnehmer;
wobei das fibrillierbare Bindemittel Polytetrafluorethylen umfasst; und
das fibrillierbare Bindemittel ferner acrylmodifiziertes Polytetrafluorethylen umfasst.

7. Verfahren zur Herstellung der Elektrode für die Sekundärbatterie nach Anspruch 6, wobei das Pulver in Schritt (c) einen Teilchendurchmesser von 100 µm bis 1000 µm aufweist.

8. Verfahren zur Herstellung der Elektrode für die Sekundärbatterie nach Anspruch 6, wobei das fibrillierbare Bindemittel Polytetrafluorethylen und das acrylmodifizierte Polytetrafluorethylen in einem Gewichtsverhältnis von 1:9 bis 9:1 umfasst.

9. Verfahren zur Herstellung der Elektrode für die Sekundärbatterie nach Anspruch 6, wobei das acrylmodifizierte Polytetrafluorethylen durch Mischen von Polytetrafluorethylen und einem Acrylpolymer in einem Gewichtsverhältnis von 7:3 bis 3:7 gebildet wird.

10. Verfahren nach Anspruch 6, wobei Schritt (b) bei der Glasübergangstemperatur von Polytetrafluorethylen oder bei einer Temperatur, die höher als die Glasübergangstemperatur von Polytetrafluorethylen und niedriger als die Glasübergangstemperatur von acrylmodifiziertem Polytetrafluorethylen ist, durchgeführt wird und Schritt (d) bei der Glasübergangstemperatur von acrylmodifiziertem Polytetrafluorethylen oder bei einer Temperatur, die höher als die Glasübergangstemperatur von acrylmodifiziertem Polytetrafluorethylen ist, durchgeführt wird.

11. Sekundärbatterie, umfassend die Elektrode nach Anspruch 1.

## Revendications

1. Électrode pour une batterie rechargeable comprenant un film d'électrode sec comprenant un matériau actif ayant un diamètre de particule moyen de 0,05 *µ*m à 3 *µ*m, un matériau électroconducteur et un liant fibrillé ; et un collecteur de courant sur lequel le film d'électrode sec est empilé ;
dans lequel le film d'électrode sec est un film autonome
le liant fibrillé comprend un polytétrafluoroéthylène ; et
le liant fibrillé comprend en outre un polytétrafluoroéthylène modifié par un acrylique.

2. Électrode pour la batterie rechargeable selon la revendication 1, dans laquelle le liant fibrillé comprend le polytétrafluoroéthylène et le polytétrafluoroéthylène modifié par un acrylique dans un rapport en poids de 1:9 à 9:1.

3. Électrode pour la batterie rechargeable selon la revendication 1, dans laquelle le polytétrafluoroéthylène modifié par un acrylique est formé en mélangeant un polytétrafluoroéthylène et un polymère acrylique dans un rapport en poids de 7:3 à 3:7.

4. Électrode pour la batterie rechargeable selon la revendication 1, dans laquelle le diamètre de particule moyen du matériau actif est 0,05 *µ*m à 2 *µ*m.

5. Électrode pour la batterie rechargeable selon la revendication 1, dans laquelle le film d'électrode sec comprend des fibres fibrillées dans plusieurs directions par la production de la pâte sèche pour l'électrode par la fibrillation primaire du liant fibrillable, la pulvérisation par broyage de la pâte sèche pour l'électrode et la fibrillation secondaire du liant fibrillable pendant la formation du film d'électrode sec en pressurisant la poudre.

6. Procédé de fabrication d'une électrode pour une batterie rechargeable comprenant les étapes consistant à
(a) mélanger un matériau actif ayant un diamètre de particule moyen de 0,05 *µ*m à 3 *µ*m, un matériau électroconducteur et un liant fibrillable ;
(b) effectuer un mélangeage à cisaillement sur le mélange pour fibrer le liant fibrillable et pour préparer ainsi une pâte sèche pour l'électrode ;
(c) pulvériser la pâte sèche pour l'électrode pour préparer un état de poudre ;
(d) mouler la poudre sous la forme d'un film autonome en pressant la poudre ;
et
(e) empiler le film autonome sur un collecteur de courant ;
dans lequel le liant fibrillable comprend un polytétrafluoroéthylène ; et
le liant fibrillable comprend en outre un polytétrafluoroéthylène modifié par un acrylique.

7. Procédé de fabrication de l'électrode pour la batterie rechargeable selon la revendication 6, dans lequel la poudre à l'étape (c) a un diamètre de particule de 100 *µ*m à 1000 *µ*m.

8. Procédé de fabrication de l'électrode pour la batterie rechargeable selon la revendication 6, dans lequel le liant fibrillable comprend un polytétrafluoroéthylène et le polytétrafluoroéthylène modifié par un acrylique dans un rapport en poids de 1:9 à 9:1.

9. Procédé de fabrication de l'électrode pour la batterie rechargeable selon la revendication 6, dans lequel le polytétrafluoroéthylène modifié par un acrylique est formé en mélangeant du polytétrafluoroéthylène et un polymère acrylique dans un rapport en poids de 7:3 à 3:7.

10. Procédé selon la revendication 6, dans lequel l'étape (b) est effectuée à la température de transition vitreuse du polytétrafluoroéthylène ou à une température supérieure à la température de transition vitreuse du polytétrafluoroéthylène et inférieure à la température de transition vitreuse du polytétrafluoroéthylène modifié par un acrylique, et l'étape (d) est effectuée à la température de transition vitreuse du polytétrafluoroéthylène modifié par un acrylique ou à une température supérieure à la température de transition vitreuse du polytétrafluoroéthylène modifié par un acrylique.

11. Batterie rechargeable comprenant l'électrode selon la revendication 1.
